**Europäisches Patentamt**

**European Patent Office**

**Office européen des brevets**

(19)

(11) **EP 1 146 726 A1**

(12) # EUROPEAN PATENT APPLICATION

(43) Date of publication:
**17.10.2001 Bulletin 2001/42**

(51) Int Cl.$^7$: **H04N 1/60**

(21) Application number: **00123727.0**

(22) Date of filing: **31.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.04.2000 EP 00201298**

(71) Applicant: **AGFA-GEVAERT N.V.**
**2640 Mortsel (BE)**

(72) Inventor: **Mahy, Marc, c/o Agfa-Gevaert N.V**
**2640 Mortsel (BE)**

(74) Representative: **Van Ostaeyen, Marc Albert Jozef**
**Agfa-Gevaert N.V.**
**Corporate IP Department 3800**
**Septestraat 27**
**2640 Mortsel (BE)**

(54) **Method for optimising the colour target for a printer model**

(57)    A method for generating a printer model of a printing device, and a colour target used in generating the printer model. The printer model is used to predict the colour values produced by the printing device when the device is addressed by specific colorant values (11,12). The printer model may be defined by a plurality of colorant points (15) in colorant space and corresponding colour points in colour space. When printed by the printing device, the colour patches corresponding to this plurality of colorant points constitute a colour target. The method reduces the set of colorant points by removing the colorant points (15) of which the corresponding colour point can be predicted within a given tolerance by the colour points of the neighbouring colorant points in colorant space.

Fig.8

EP 1 146 726 A1

**Description**

FIELD OF THE INVENTION

The present invention relates to the field of image rendering by means of printing devices, particularly multicolour output devices; the invention especially concerns generating a printer model of these devices.

BACKGROUND OF THE INVENTION AND DEFINITION OF TERMS

In digital colour management systems, printing devices - or printers - are modelled by printing a number of "colour patches" and measuring them (see "Digital Color Management", E.J. Giorganni and T.E. Madden, Addison-Wesley, Reading, Massachusetts, 1998). The colour patches are defined in the device "colour space" of the printer and constitute the "colour target". The "colorants", having "colorant values", are the independent variables with which the printer is addressed. Based on the data sets consisting of the colorant values used in printing the colour patches on the one hand and the measured "colour values" of the colour patches on the other hand, a "printer model" is constructed (remark: a measurement instrument such as a spectrophotometer or a colorimeter may be used to determine the colour values, see e.g. patent application **EP 99 20 2958** filed on September 10, 1999). The printer model predicts the printer's output colour values as a function of the input colorant values for the printer. Hence, the printer model is a function from "colorant space" to colour space. The domain is called the "colorant domain", the corresponding range the "gamut" (see "Calculation of color gamuts based on the Neugebauer model", M. Mahy, Col. Res. Appl., Vol. 22, Nr. 6, 1997). The colorant values corresponding to a colour patch are the co-ordinates of a "colorant point" in colorant space; this colorant point is transformed by the printer model into a "colour point" having colour values in colour space.

Take e.g. a CMYK printer: the colorant values are the CMYK values (as is customary, C represents cyan, M represents magenta, Y represents yellow and K represents black). The colorant space is a four-dimensional space obtained by representing the CMYK values along four perpendicular axes. If there are no ink limitations, the colorant domain is the "colorant cube". The colour space is in general a three-dimensional device independent colour space such as XYZ or CIELAB (see "Color Science: Concepts and Methods, Quantitative Data and Formulae", G. Wyszecki and W.S. Stiles, John Wiley & sons, second edition, 1982).

In general, the colorant values are denoted as $C_1$, $C_2$, .. $C_N$ wherein N is the number of colorants of the printer. It is customary to express colorant values of a printing device in %, which means that usually the colorant values range from 0 % to 100 %; to simplify the notation, in this document the range of the colorant values is from 0 to 100.

Generating a printer model is also called "printer characterisation" or "profiling". Before a printer is characterised, it is first "calibrated", which means that the printer is put in a standard state (see also patent application **EP 99 20 2958**, referred to above).

Since the colour patches of the colour target and the corresponding colour values are used to model the printer, the accuracy of the printer model largely depends on the choice of the colour patches. Several standardised colour targets are used to model printers. The most common colour target for CMYK devices is the IT8.7/3 target. This colour target includes the following set of "sampling points" that are distributed rather regularly in colorant space: for K = 0 and K = 20, the CMY values are sampled for the colorant values 0, 10, 20, 40, 70 and 100; for K = 40 and K = 60, only the values 0, 20, 40, 70 and 100 are taken into account for CMY; for K = 80, this set is reduced to 0, 40, 70 and 100; for K = 100, only combinations of 0 and 100 are included. Apart from these colours also step wedges for CMYK and a number of custom colours are included in the IT8.7/3 target.

There are two main characteristics in the design of this colour target. First of all, less colours are provided if K increases, or in other words if the colours become darker. From an intuitive point of view, this is logical, as less colorant combinations are needed in the darker part of the gamut to model the printer accurately. On the other hand, there are more sampling points at lower values to compensate dot gain.

However, a colour target based on these intuitive characteristics is not necessarily optimal for a given printer. Are there enough colour patches? Are there too many colour patches? What about the big gap between 70 and 100? What for printing systems with different dot gain values?

The design of colour targets for a given printer has been studied in general in "Recent Results in Color Calibration Using Sequential Linear Interpolation", Chang et al, IS&T's 47th Annual Conference/ICPS, pp. 500-505, 1994. Here a very large number of colour patches are printed and measured - e.g. 10 sampling points per colorant axis are taken, resulting in $10^4$ = 10 000 colour patches for a CMYK printer. Then, the set of colour patches is reduced; whether a colour patch is removed or not is determined by the values of locally calculated derivatives of a function that has as function values the colour values of a subset of the colour patches.

To characterise printing devices, several printer models are known (see "Principles of Color Reproduction", J.A.C. Yule, John Wiley & sons, 1967; and "The reproduction of colour", R.W.G. Hunt, Fountain Press, England, fifth edition, 1995; and "Color Technology for Electronic Imaging Devices", H.R. Kang, SPIE Optical Engineering Press, 1997). Preferably, a model is chosen that mimics the colour mixing behaviour of a given printer technology. The advantage of choosing such a model is that less colour patches are needed to properly characterise the printer. Typical examples of colour mixing types for which a minimum number of colour patches are needed are additive and subtractive colour mixing.

In practice, however, there are no printers that can be modelled easily. In literature, both "global" and "localised" models are presented (see "Output Characterization Based on the Localized Neugebauer Model", M. Mahy, ICPS 98, pp. 30-34, Sept. 7-11, 1998). In general, global models are higher order polynomials or can accurately be approximated by higher order polynomials, whereas localised models make use of a simplified model in a limited region of the colorant space. Localised models can be seen as a set of models that each defines the printer behaviour in a given region of colorant space. The different regions are called "cells" and the corresponding model the "elementary model" of the cell. In general, cells may overlap.

Printer models as known in the art, both global and localised types of models, require an extensive set of colour patches. A disadvantage of using many colour patches is that much time is required to measure the colour patches in order to characterise the printer. Another disadvantage is that the obtained printer models and profiles are large. A profile is a data file that results from the printer characterisation process and that can be used to characterise the printer. An ICC profile is a well-known profile in the art. Often, a profile is embedded in an image data file of an image that has to be printed. To save memory space and storage space for image data files, it is thus important to reduce the number of colour patches of a colour target.

However, reducing the set of colour patches is not easy since the accuracy of a printer model largely depends on the choice of the colour patches, as discussed above.

OBJECTS OF THE INVENTION

It is therefore an object of the present invention to provide a method for generating a printer model that has high accuracy on the one hand and requires little colorant points on the other hand.

It is a further object of the invention to provide a colour target that allows accurate printer modelling and that has a small number of colour patches.

DEFINITION OF ADDITIONAL TERMS

A "colour distance" between two colour points in colour space is a Euclidean or non-Euclidean distance in a colour space, which has a dimension $m \geq 1$, or in a subspace of the colour space.

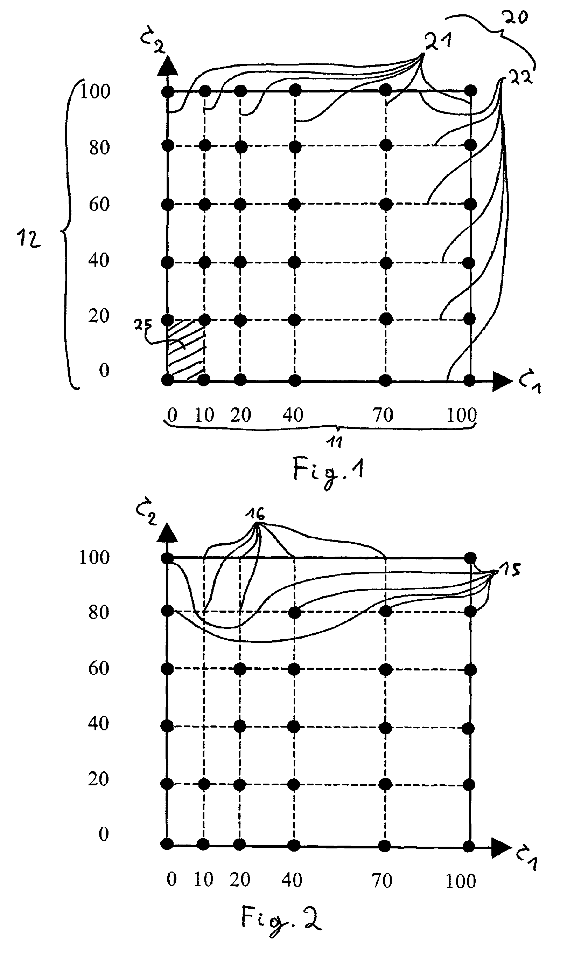

In this document, preferably localised printer models are used to model output devices. As mentioned above, in general the cells of a localised printer model may overlap; in this document, however, preferably localised models are used that have a finite number of non-overlapping cells. Preferably, the union of all the cells constitutes the colorant domain of the localised model. It is preferred that a lower and an upper colorant value per colorant axis define the boundaries of the cells. In the case of a finite number of non-overlapping cells, all these colorant values give rise to a finite number of points per colorant axis. These points are the sampling points of the corresponding axis, ordered from the lowest to the highest value. In the example shown in Fig. 1 and discussed further below, there are six sampling points 11 for colorant axis $C_1$ and six sampling points 12 for colorant axis $C_2$. Since the range of the colorant values is from 0 to 100, preferably the lowest and the highest values of the sampling points of a colorant axis are respectively 0 and 100. In general, the $i^{th}$ colorant axis has $n_i$ sampling points $S_{k,i}$, with k varying from 1 to $n_i$ with a step of 1, such that:

$$S_{1,i} = 0 < S_{2i} < ... < S_{ni,i} = 100 \tag{1}$$

The lower and upper colorant values of a cell are also called the "lower and upper boundaries" of the cell in this document.

The elementary model of a cell may be a Neugebauer model, but another model may also be used. The Neugebauer model can be seen as the basic colour mixing behaviour of printing processes (see "Die theoretischen Grundlagen des Mehrfarbenbuchdrucks", H.E.J. Neugebauer, Zeitschrift für wissenschaftliche Photographie, Photophysik und Photochemie, Band 36, Heft 4, pp. 73-89, 1937; and E. Demichel, Procede, 26, 17-21, 26-27, 1924). The elementary model is preferably defined by the colour values at the "corner points" of the cell; a printer model constructed in this way is called a "localised Neugebauer model" (see "Output Characterization Based on the Localized Neugebauer Model", M. Mahy, ICPS 98, pp. 30-34, Sept. 7-11, 1998; and "Accuracy of Various Types of Neugebauer Model", R. Rolleston and R. Balasubramanian, presented at the 1993 IS&T and SID's Color Imaging Conference on Transformation & Transportability of Color).

A "regular grid" in colorant space is a grid consisting of grid lines parallel to the colorant axes. If, for all cells, the lower and upper boundaries per axis are succeeding sampling points, then a "complete localised model" is obtained. If the elementary models are Neugebauer models, a "complete localised Neugebauer model" is constructed. In this case, all the colour values are needed for the regular grid in colorant space that is defined by the sampling points per colorant axis. A colour target containing all these colour patches is a "complete colour target".

If at least one measurement value of the regular grid in colorant space is missing, an "incomplete localised model" is obtained. The corresponding colour target is an "incomplete colour target".

To represent printer models easily, consider a two-dimensional case by way of example. The printer model transforms colorant values $C_1C_2$ from a two-dimensional colorant space (see also Fig. 1 ff.) to colour values $X_1X_2$ in a two-dimensional colour space. Take for example, as shown in Figs. 1 and 2, six sampling points 11 for the first colorant axis $C_1$: 0, 10, 20, 40, 70 and 100 and also six sampling points 12 for the second colorant axis $C_2$: 0, 20, 40, 60, 80 and 100. To build a complete localised printer model, all the thirty-six combinations of $C_1$ and $C_2$ have to be printed. A corresponding complete colour target is represented in colorant space by Fig. 1 and an incomplete colour target by Fig. 2. The sampling points constitute a regular grid 20 indicated by dashed lines, the "grid lines" 21, 22, in the $C_1C_2$ colorant domain. A bullet indicates colour patches contained in the colour target: to colorant points 15, colour patches correspond, while colorant points 16 do not have corresponding colour patches. In order to keep the drawings readable, not all reference numbers are indicated in Figs. 1 and 2. The reference numbers 21, 22 of the grid lines are only indicated in Fig. 1, not in Fig. 2. The reference numbers 15, 16 of only some of the colorant points, which are located at the intersections of grid lines 21 and 22, are shown in Fig. 2, not in Fig. 1.

SUMMARY OF THE INVENTION

The above mentioned objects are realised by a method and a colour target in accordance with the present invention as claimed in the independent claims. The dependent claims set out preferred embodiments of the invention.

In a method in accordance with the invention, one or more colorant points are removed from a set of initial colorant points, which each have a corresponding colour point. The removed colorant points are chosen in such a way that the colour points corresponding to the removed points can be predicted well enough, i.e. within a specified colour tolerance. For the prediction, remaining colorant points are used and the colour points corresponding to these remaining colorant points. In a preferred embodiment, the remaining colorant points that are used for the prediction of the colour point corresponding to a selected removed colorant point are in the neighbourhood of that selected colorant point in colorant space.

The colour target that corresponds to the set of initial colorant points preferably comprises a large set of colour patches, which may lie on a regular grid in colorant space. Based on the colorant combinations of these colour patches and the corresponding measured colour values, a localised printer model can be built. Then, colour patches are looked for that can be predicted quite well by neighbouring patches, i.e. patches corresponding to neighbouring colorant points in colorant space. This prediction is preferably guided by the complete localised model. If the error between the measured values of the colour patches and the predicted values is smaller than a specified colour tolerance, these colour patches can be seen as redundant and can be removed to obtain a reduced set of colour patches. In this way, the colour target is optimised.

In a specific embodiment of the invention, the criterion used in deciding if a colour patch is to be removed from the colour target - or if a colorant point is to be removed from the set of initial colorant points - is based on a colour distance. The colour distance is determined between on the one hand the colour point corresponding to a specific colour patch - or to a specific colorant point - and on the other hand the predicted colour point. If this colour distance is smaller than the specified colour tolerance, then the specific colour patch - or the specific colorant point - is removed. The colour distance may be a CIE $\Delta E$ colour distance such as $\Delta E^*_{uv}$ or, which is preferred, $\Delta E^*_{ab}$ which is also called CIELAB $\Delta E$ colour distance (see "The reproduction of colour", R.W.G. Hunt, Fountain Press, England, fourth edition, 1987, section 8.8, 'Uniform colour spaces').

An advantage of a method according to the invention is that printer models and profiles can be generated that are accurate and small. The corresponding colour targets allow accurate printer modelling and have only a limited number of colour patches.

Further advantages and embodiments of the present invention will become apparent from the following description and drawings.

BRIEF DESCRIPTION OF THE DRAWINGS

The invention is described with reference to the following drawings without the intention to limit the invention thereto, and in which:

Fig. 1 shows a complete colour target in colorant space;
Fig. 2 shows an incomplete colour target in colorant space;
Fig. 3 shows another incomplete colour target in colorant space;
Fig. 4 shows a division of the colorant cube into a maximum number of cells for the colour target of Fig. 3;
Fig. 5 shows cells obtained via the horizontal division technique, for the colour target of Fig. 3;
Fig. 6 shows cells obtained via the vertical division technique, for the colour target of Fig. 3;
Fig. 7 shows the invariant boundaries and invariant cells for the colour target of Fig. 3;
Fig. 8 shows cells obtained via an alternative division technique, for the colour target of Fig. 3;
Fig. 9 shows a division of the colorant cube into a minimum number of cells for the colour target of Fig. 3;
Fig. 10 shows the invariant boundaries for the colour target of Fig. 2.

DETAILED DESCRIPTION OF THE INVENTION

Fig. 1 shows a complete colour target that contains all the colour patches on a regular grid 20 in colorant space. The cells 25 are determined by the regular grid 20: each cell is bounded by grid lines 21, 22. In Fig. 1 only one cell 25 is shown hatched; there are twenty-five cells in total. In general, if $n_i$ represents the number of sampling points of colorant axis i, the number of cells is given by

$$(n_1 - 1)*(n_2 - 1)* ... *(n_i - 1)* ... *(n_D - 1) \qquad (2)$$

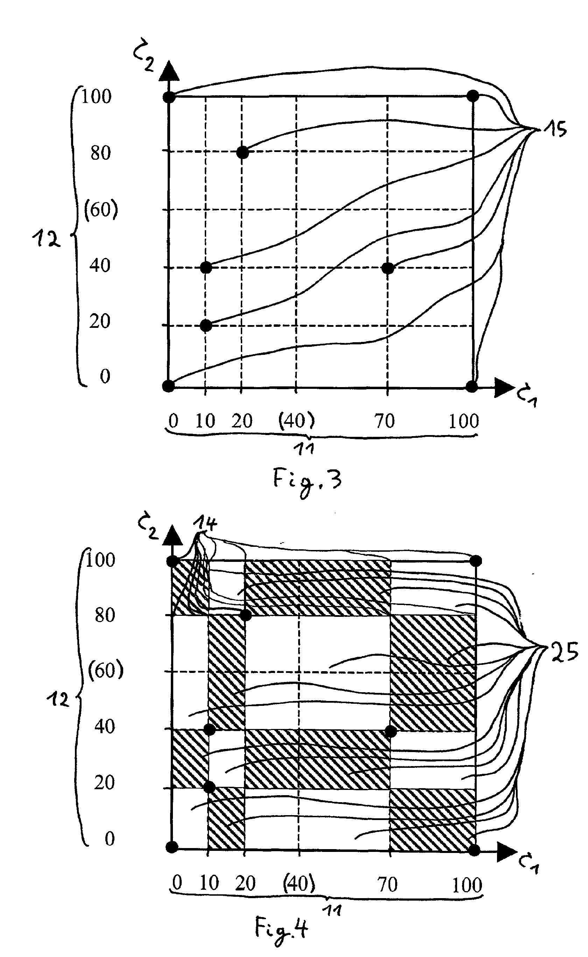

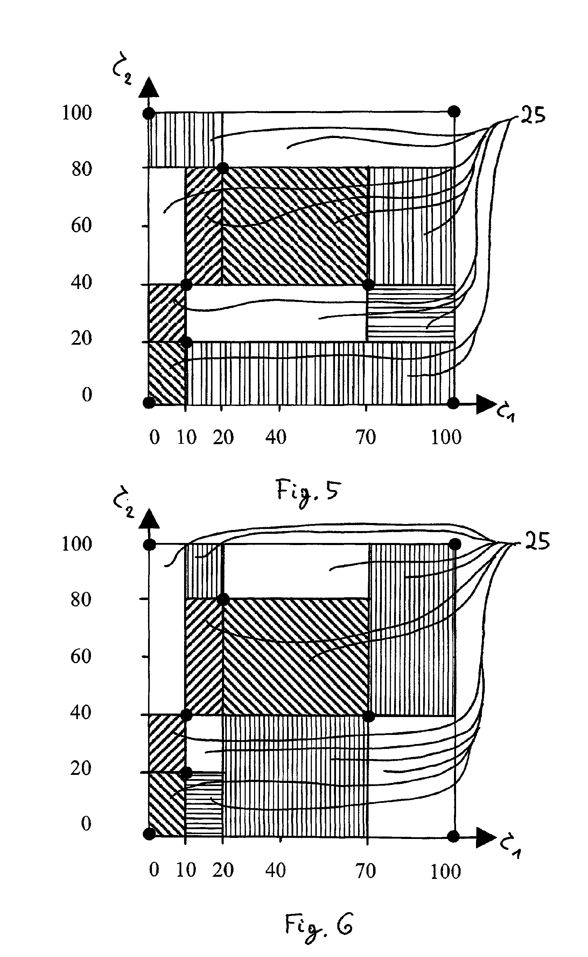

wherein D is the dimension of the colorant space. For a complete colour target, there is a unique division of the colorant cube in a number of cells; this division is determined by the regular grid.
In case of an incomplete colour target, however, there is not always a unique division of the colorant cube in a number of cells. A number of different techniques will now be disclosed to divide the colorant cube into cells. The incomplete colour target of Fig. 3 is used by way of example.
Two cases are discussed. In the first case, all the colour patches have to lie at corner points of the obtained cells. In the second case, there is no such restriction.
In the first case, all colour patches have to lie at corner points of cells.
Below, first, the maximum number of cells will be determined. Then, to reduce this number, a horizontal and a vertical division technique will be introduced. Finally, the minimum number of cells will be determined which can actually be found by a combination of the horizontal and the vertical division technique.
To determine the maximum number of cells, a new set of sampling points is determined. In this new set, only the sampling points are selected to which at least one colour patch corresponds. In the example shown in Fig. 3, there are eight colorant points 15 that have a corresponding colour patch, indicated by a bullet. There are no colour patches with $C_1 = 40$ and no colour patches with $C_2 = 60$. Therefore, the sampling points $C_1 = 40$ and $C_2 = 60$ are dropped - their sampling values are placed between parentheses in Fig. 3. Of the six sampling points 11, 12 per axis only five remain; these remaining sampling points are referred to as the new sampling points. The maximum number of cells is thus, cf. equation (2): $(5 - 1)^*(5 - 1) = 16$. These sixteen cells 25 are indicated in Fig. 4. Remark: in Figs. 3 and 4, the grid lines 21, 22 are indicated by dashed lines, but, to keep the drawings readable, their reference numbers are not indicated.
There is, however, still a problem to be solved. To determine the elementary models of all the cells 25, all the colour values at the corner points of the cells have to be known. Fig. 4 shows that there are twenty-five corner points 14, five for each of the five new sampling points along axis $C_2$ (the reference numbers of only ten corner points 14 are indicated in Fig. 4 to keep the drawing readable). Only for the eight colorant points 15 of Fig. 3, the colour values are known. A technique to determine the colour values at the seventeen remaining corner points is the following one; this technique will be referred to as the horizontal division technique:

a. order the different colorant axes: take first $C_2$ and then $C_1$. The first colorant $C_2$ is considered as the slowest changing colorant, whereas the second colorant, along the horizontal axis $C_1$, is the fastest changing colorant;
b. initialise the lower boundary for $C_2$, i.e. for the first colorant, to 0;
c. determine the upper boundary for $C_2$; this is, starting from the lower boundary value for $C_2$ (which is 0 in the example of Fig. 4), the next new sampling point for $C_2$ (which is 20 in Fig. 4). Consider now the ink process in the interval 0-20 for $C_2$ and 0-100 for $C_1$ in Fig. 4. Such an ink process with a limited range for one colorant, e.g. $C_2$, and the full range for the other colorants is referred to as a subprocess, in this case a subprocess of $C_2$;
d. determine the colour values of the corner points of the subprocess. In Fig. 4, the corner points of the subprocess are the colorant combinations (0,0), (100,0), (0,20) and (100,20).

Determine the missing colour values by using the colour values of colorant points 15 for which a colour patch is provided. Take e.g. the combination (0,20): look along the $C_2$-axis for the largest lower and the smallest upper colorant combinations for which colour values are provided (i.e. $C_2$ varies but $C_1$ is fixed). In Fig. 4 these colorant combinations, having a corresponding bullet, are (0,0) and (0,100). Now determine the colour values for the colorant combination (0,20) by interpolating between the largest lower and the smallest upper colorant combinations. As the interpolation occurs along a line parallel to one of the colorant axes, the Neugebauer equation is reduced to linear interpolation. In a similar way the colour values for the colorant combination (100,20) are calculated;

e. now, the new cells will be determined for the subprocess 0-20 of $C_2$: first set the lower boundary for $C_1$ to 0;

f. then take as upper boundary for $C_1$ the next new sampling point for $C_1$ (which is 10 in Fig. 4). The first new cell in the example of Fig. 4 is the cell with range 0-10 for $C_1$ and 0-20 for $C_2$. For this cell, no colour values are provided for some corner points. As before, these values are obtained by linear interpolation but in this case the interpolation occurs along the $C_1$-axis. For the corner point (10,0), the largest lower and smallest upper colorant combinations are looked for along the $C_1$ direction. These colorant combinations are (0,0) and (100,0). The colour values for (10,0) are obtained by linear interpolation between the colour values of (0,0) and (100,0);

g. take as new lower boundary for $C_1$ the old upper boundary for $C_1$ and restart the previous step until the lower boundary for $C_1$ is set to 100; in this way, all new cells are determined for the subprocess 0-20 of $C_2$;

h. now take as new lower boundary for $C_2$ the old upper boundary for $C_2$ and restart the whole procedure from step c on until the lower boundary for $C_2$ is set to 100.

In this way, all the corner points are determined and all the cells are found. However, the number of cells can still be reduced, as will now be discussed. The method with steps a to h as disclosed above leads to the maximum number of cells (sixteen cells). There is some redundancy: e.g. the second, third and fourth cells, in the range $C_1$: 10-100 and $C_2$: 0-20 (see Fig. 4), are all described by the same elementary model. This can be detected by the previous method. Instead of taking, in step f, as upper boundary for $C_1$ the next new sampling point for $C_1$, the next new sampling point is taken for which a colour patch is available within the specified range of $C_2$.

This method is called the horizontal division technique; Fig. 5 shows the cells 25 that are obtained. This division of the $C_1C_2$-colorant cube is called the horizontal division of the colorant cube because cells are combined to larger cells in the direction of the horizontal $C_1$ axis, since $C_1$ was chosen as the fastest changing colorant.

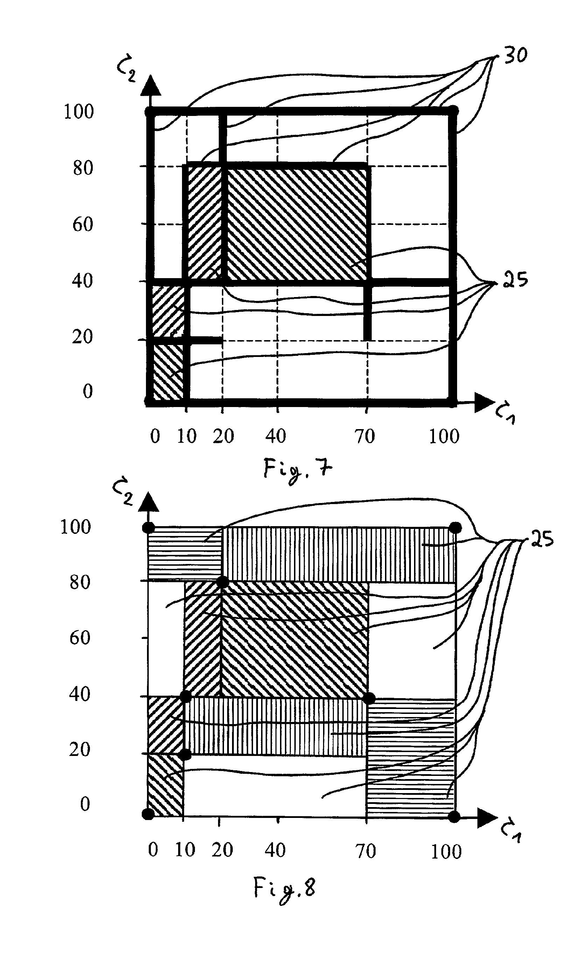

The division technique wherein $C_2$ is the fastest changing colorant is called the vertical division technique. Fig. 6 shows, for the colour target of Fig. 3, the cells 25 obtained via the vertical division technique.

An important characteristic of the horizontal and vertical division techniques is that all the colour patches are at corner points of cells. This is simply caused by the way cells are constructed.

If the colour patches have to lie at corner points of the obtained cells, then to each colour patch a number of line segments can be assigned that are boundaries between cells for any division of the colorant cube for which the colour patches have to lie at corner points. Such a line segment starts in a colour patch and follows a grid line passing through the colour patch up to the nearest intersection with another new grid line. These line segments are called invariant boundaries. The line segments forming the boundary of the colorant cube are always cell boundaries, for any division of the colorant cube; hence these line segments are also invariant boundaries. For the colour patches of the example of Fig. 3, the invariant boundaries 30 are shown in Fig. 7 as thick black lines (remark: the reference numbers 30 of only some of the invariant boundaries are indicated in Fig. 7, in order to keep the drawing readable). In Fig. 7, four cells 25 are formed by the invariant boundaries 30; they are called invariant cells and are shown hatched in Fig. 7. The invariant boundaries 30 and invariant cells 25 of Fig. 7 are present in any division of the colorant cube for which the colour patches - corresponding to the colour target of Fig. 3 - have to lie at corner points of cells. This can easily be verified for the horizontal division shown in Fig. 5 and the vertical division shown in Fig. 6.

Apart from the invariant cells, the other parts of the colorant cube can be divided in different ways. Two examples were already shown with the horizontal and vertical division, but there are many more. If the number of cells is counted, it is seen that a different number of cells may be obtained by the different techniques. For the horizontal division of Fig. 5, there are eleven cells 25, while for the vertical division of Fig. 6, twelve cells 25 are obtained.

The number of cells obtained with the horizontal division technique can be determined as follows. Take a subprocess and count the number of colour patches belonging to this subprocess that are not corner points of this subprocess; call this number $S_1$. Take for example in Fig. 5 the first subprocess 0-20 of $C_2$: $S_1 = 1$ (the colour patch at (10,20)). Then, calculate for the same subprocess the number of pairs of colour patches that have the same $C_1$-value; call this number $S_2$ ($S_2 = 0$ for the example). The number of cells for this subprocess is then $S_1 - S_2 + 1$ (= 1 - 0 + 1 = 2 for the example). The sum of the number of cells for all the subprocesses is the total number of cells obtained with the horizontal division technique. In an analogue way (replace $C_1$ by $C_2$ and vice versa) the number of cells for the vertical division technique can be determined.

Now, the different number of cells obtained by the vertical and horizontal division techniques can be explained. For the vertical technique, $S_2$ is zero for all subprocesses and for all cells. For the horizontal technique, however, there are two colour patches with the same $C_1$-value in the second subprocess 0-20 of $C_2$ (the patches at (10,20) and at (10,40)). Therefore, the number of cells with the horizontal division technique is one less than the number with the vertical division technique.

The minimum number of cells, on condition that the colour patches have to lie at corner points of the obtained cells, can be found by making use of combinatorics; the used technique is in fact a combination of the horizontal and vertical division techniques. For the colour target of Fig. 3, it can be shown that there are eight different divisions resulting in the minimum number of cells, which is eleven. In Fig. 8, one of these eight divisions is shown, having eleven cells 25. The horizontal division technique also resulted in the minimum number of eleven cells 25, as shown in Fig. 5; however, this is in fact a coincidence. In general, neither the horizontal nor the vertical division technique leads to a division of the colorant cube with the minimum number of cells.

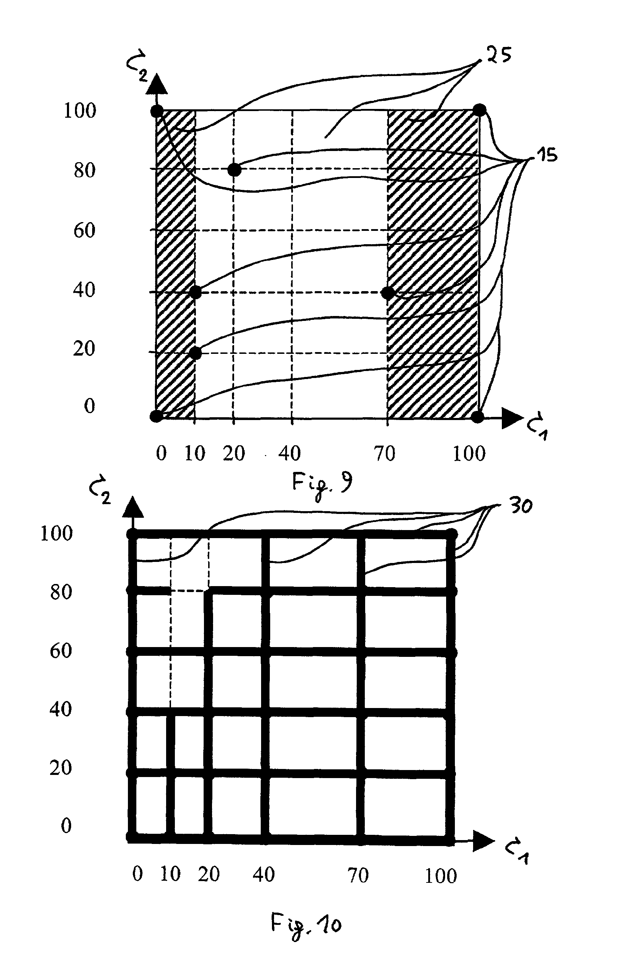

In the first case, discussed above, the colour patches had to lie at corner points of cells. Consider now the second case wherein the colour patches don't have to lie at corner points of cells. In this second case, the number of cells can be reduced significantly. For the example of the colour target of Fig. 3, it can be shown that the number of cells can be reduced from eleven to three. The division of the colorant cube into three cells 25 is represented in Fig. 9.

The division into three cells 25 of Fig. 9 can be obtained by rearranging the colour patches, by using simple characteristics of the Neugebauer equations, so that the rearranged colour patches are at corner points of the cells. Remark: a division wherein all colour patches lie at corner points of cells is called a canonical division or canonical representation; the techniques discussed above, under the first case, thus lead to a canonical representation. The colour patches, shown by a bullet at colorant points 15 in Fig. 9, may be rearranged as follows:

- the two colour patches with $C_1$ = 10, at (10,20) and (10,40), are moved by linear extrapolation to (10,0) and (10,100); the linear extrapolation is based on the original colorant values and colour values at (10,20) and (10,40);
- a help patch is constructed at (10,80) by linear interpolation between (10,0) and (10,100);
- the colour patch at (20,80) is moved to (70,80) by linear extrapolation, using the help patch at (10,80) and the original colorant values and colour values at (20,80);
- the help patch at (10,80) is removed;
- the patches at (70,40) and (70,80) are moved by linear extrapolation to (70,0) and (70,100). Thus, eight rearranged colour patches at the eight corner points of the three cells 25 in Fig. 9 are obtained from the eight original colour patches at colorant points 15.

Different techniques were disclosed above to divide the colorant cube into cells for an incomplete colour target. Two cases were discussed, wherein the colour patches had to lie at corner points of the cells (first case) and did not have to lie at corner points of the cells (second case).

Below, first the IT8.7/3 target is further discussed and then a technique is introduced to reduce the number of colour patches and the number of cells by using a colour tolerance.

The IT8.7/3 target was described above, under the "Background of the invention". It is a standard CMYK colour target that includes step wedges for CMYK, a number of custom colours and a set of sampling points that are distributed rather regularly in colorant space. This set of sampling points can approximately be described by the sampling points 0, 20, 40, 60, 80, 100 for black and 0, 10, 20, 40, 70, 100 for cyan, magenta and yellow, while less sampling points for cyan, magenta and yellow are provided as K increases (see the description of the IT8.7/3 target above for the details). This set of sampling points is referred to as the "subset of IT8.7/3"; it is shown in Fig. 2 for the cyan-black colorant cube ($C_1$ represents cyan and $C_2$ represents black in Fig. 2). Fig. 10 shows the corresponding invariant boundaries 30; to keep the drawing readable, not all reference numbers 30 are indicated in Fig. 10. As can be seen in Fig. 10, a large number of invariant cells are obtained (not indicated by reference signs). Starting from Fig. 10, the horizontal and the vertical division can easily be constructed. The maximum number of cells is twenty-five for the cyan-black process. For the horizontal division twenty-one cells are found and for the vertical division twenty-four cells. Extending these results to the CMYK colorant space leads to a maximum number of 625 cells. For the vertical division (with K as the fastest varying colorant) this number is reduced to 446 cells, for the horizontal division (with K as the slowest changing colorant) still 405 cells are required. It can be verified that the minimum number of cells, on condition that the colour patches have to lie at corner points of the obtained cells, is obtained by the horizontal division technique, both for the two-dimensional cyan-black colorant space and for the four-dimensional CMYK colorant space.

Based on the techniques disclosed above to divide the colorant cube into cells, a localised printer model can be constructed for either a complete or an incomplete colour target. However, as is clear from the techniques disclosed above, the number of cells and the size of the printer model largely depend on the colour target. Hence, the obtained printer model may be quite large.

Now, a technique is disclosed to reduce the number of colour patches and the number of cells. To eliminate a number of colour patches, an error criterion is used that takes account of the importance of each colour patch in modelling the printer adequately. The error criterion may involve a specified colour tolerance so that a selected colour patch is eliminated if the colour values of the selected colour patch can be predicted within the specified colour tolerance. The prediction may be based on the colour values of the remaining colour patches. Preferably, the prediction is based on colour values of colour patches that correspond to colorant points in colorant space in the neighbourhood of the colorant point that corresponds to the selected colour patch. For the prediction, any approximation method or curve fitting method as known in the art may be used that predicts colour values for the selected colour patch, based on colour values of one or more remaining colour patches. Preferably, the printer model itself in used in determining the predicted colour values.

The horizontal or vertical techniques, discussed above, may be used for the prediction. Common boundaries of cells are checked to see if they can be predicted by the boundaries just before and after the common boundary. Preferably, this evaluation is applied for all the colour patches corresponding to corner points of the common boundary. If at least one corner point cannot be predicted properly, i.e. within the specified colour tolerance, then the boundary is retained, otherwise it may be eliminated.

As discussed above, under the "Summary of the invention", the error criterion used in deciding if a colour patch is to be removed or not may be based on a colour distance. The colour distance may be a CIE $\Delta E$ colour distance such as $\Delta E^*_{uv}$ or, which is preferred, $\Delta E^*_{ab}$ which is also called CIELAB $\Delta E$ colour distance. Preferably, the colour distance is determined between the predicted colour values and the measured colour values of a selected colour patch. To take into account measurement errors and instabilities of the printer, the colour tolerance may depend on the colorant combinations. As an example, when more ink is laid down, the printer is less stable and most colour measurement instruments provide less accurate colour values; therefore the colour tolerance may have a larger value for darker colours - when more ink is laid down - than for lighter colours.

Table 1

| Error | Swop | | Newspaper | |
|---|---|---|---|---|
| | Number of patches | Number of cells | Number of patches | Number of cells |
| 0.0 | 754 | 405 | 754 | 405 |
| 1.0 | 309 | 252 | 570 | 353 |
| 2.0 | 94 | 60 | 225 | 177 |
| 3.0 | 44 | 21 | 100 | 72 |
| 4.0 | 28 | 7 | 73 | 36 |
| 5.0 | 24 | 4 | 58 | 24 |
| 10.0 | 19 | 3 | 24 | 4 |

Depending on the value of the colour tolerance, the number of colour patches and the number of cells can be reduced significantly. Table 1 gives the number of colour patches and the number of cells for two different printing technologies if a localised printer model is constructed in combination with an error criterion, starting from the colour patches of the subset of IT8.7/3 as discussed above. The two printing technologies are swop and newspaper printing (swop is an industry standard specification for printing conditions, used e.g. for magazines). The error criterion corresponds to the CIELAB $\Delta E$ colour distance between the measured colour values and the colour values predicted by the localised printer model.

If no error is tolerated, there are 754 colour patches and 405 cells. For large errors, there is only one cell and 16 corner points. For error values in-between, the two different printing technologies behave differently. The values in Table 1 should not be interpreted in an absolute way, as the behaviour of the printers largely depends on the used paper and inks.

Table 2

| Subprocess | Printing technology | Printing technology |
|---|---|---|
| K-range | Swop | Newspaper |
| 0 - 20 | 0-20-40-70-100 | 0-10-20-40-70-100 |
| 20 - 40 | 0-40-70-100 | 0-10-20-40-70-100 |
| 40 - 60 | 0-40-70-100 | 0-40-70-100 |
| 60 - 80 | 0-70-100 | 0-40-70-100 |

Table 2   (continued)

| Subprocess | Printing technology | Printing technology |
|---|---|---|
| K-range | Swop | Newspaper |
| 80 - 100 | 0-100 | 0-70-100 |

For the example illustrated in Table 1, Table 2 gives the "typical sampling points" for the localised printer models for swop and for newspaper printing in case the localised model is constructed with a colour tolerance of two CIELAB $\Delta$E units. In the first column of Table 2, the subprocess is represented. For the horizontal division technique that is used in this case, the subprocess is determined by the range of the K-value. The second and third columns of Table 2 give, for each subprocess of K, the typical sampling points for CMY-co-ordinates. The typical sampling points for a specific colorant may be obtained as the colorant values of the reduced set of colour patches, for the specific colorant (the reduced set of colour patches is the set wherein the colour patches are removed that are redundant in view of the used error criterion. The typical sampling values can be seen as the sampling values that best characterise the printing process.

A colour target as constructed above wherein the colour patches are removed that are redundant in view of the error criterion, is referred to as the optimal colour target for a given printing process. The sampling values of the optimal colour target correspond to the typical sampling points of the printing process. The optimal colour target allows accurate printer modelling and has a small number of colour patches.

Because the dot gain of a printing process not only depends on the printing system itself but is also determined by other factors such as the paper, the optimal colour target should be independent of variations in dot gain. This independence can be obtained by a proper design of the calibration procedure. As disclosed in patent application **EP 99 20 2958** (mentioned above), the colorants may be calibrated in such a way that the colorant scale is substantially linearly related to a scale in a colour space, e.g. the CIELAB space; such a calibration allows to use the same colour target for different printing systems that have different dot gains. For such a calibration, the sampling points in colorant space are preferably uniformly distributed along the colorant axes. Hence, the optimal colour target preferably has, in a first approximation, a uniform distribution of its sampling points.

The invention is not limited to the embodiments discussed above. The colorants may have the traditional four colorant hues cyan, magenta, yellow and black; they may have other colorant hues; they may have less or more than four colorant hues; an example is a HiFi Colors™ system such as the six colour-system of the Hexachrome™ process, by Pantone® Inc.

The colorant points corresponding to the colour patches may be located on a regular grid in colorant space. The invention can also be applied to colorant points that have corresponding colour points and that are arbitrarily located in colorant space, i.e. not on a regular grid. In a particular embodiment of the invention, a localised printer model is constructed that has cells defined by D + 1 corner points, wherein D is the dimension of the colorant space. In e.g. a two-dimensional colorant space the cells are triangles; the cells are tetrahedrons in three dimensions. Preferably, the union of all the cells constitutes the colorant domain of the localised model. The colorant points that have corresponding colour patches are located at corner points of cells. A set of cells that have a common boundary are grouped together. The colour values of the corner point or corner points of this common boundary are predicted, using the colour values of the other corner points of the group of cells. If the prediction is within a specified colour tolerance, the boundary is eliminated. As discussed above, any approximation method or curve fitting method as known in the art may be used for the prediction and preferably the printer model itself is used in determining the predicted colour values.

To apply the invention, cells need not be present. The printer model that is generated may be a localised model or a global model or any printer model as known in the art. The printer model comprises colorant points, which each have a corresponding colour point. A colorant point that is removed is chosen in such a way that the colour point corresponding to the removed point can be predicted well enough, i.e. within a specified colour tolerance.

The set of initial colorant points used in generating the printer model may also be enlarged by adding a colorant point. In case the printer model is a localised model having a finite number of cells, the colorant point may be added at a corner point of one of these cells. Preferably, the added colorant point has a corresponding colour point in colour space. In a first embodiment, the added colorant point represents a colour patch that is important in modelling the printer adequately but that was not present in the initial set of colorant points. In a second embodiment, the added colorant point represents a custom colour (such as one of the custom colours that are included in the IT8.7/3 target). In a third embodiment, the added colorant point is at a corner point of a cell and the colour point corresponding to the added colorant point is determined by a technique disclosed above such as the horizontal or the vertical division technique. A printer model may also be generated by starting from a set of initial colorant points and adding points as explained above, without removing any points from the set of initial colorant points.

As mentioned above, the criterion used in deciding if a colour patch is to be removed from the colour target - or if a colorant point is to be removed from the set of initial colorant points - may be based on a colour distance. The colour distance is determined between on the one hand the colour point corresponding to a specific colour patch - or to a specific colorant point - and on the other hand the predicted colour point. If this colour distance is smaller than the specified colour tolerance, then the specific colour patch - or the specific colorant point - is removed. The colour distance may be CIELAB ΔE colour distance. In a preferred embodiment (see also Table 1) the specified colour tolerance is at most ten units of CIELAB ΔE colour distance, preferably at most five units, more preferably at most three units and most preferably at most two units.

Starting from a complete colour target, a resulting colour target can be obtained by removing those colorant points on the regular grid and their corresponding colour patches for which the colour patches are predictable within a specified colour tolerance. A colour patch is predictable if the corresponding colour point can be predicted within the specified colour tolerance by the colour points corresponding to colorant points neighbouring the removed colorant point on the regular grid. The resulting colour target then has the following characteristics. The grid lines of the grid have two kind of intersection points: first intersection points, located at first colorant points, that still have a corresponding colour patch, and second intersection points, located at second colorant points, for which the colour patch was removed. For all first colorant points, i.e. those having a colour patch, the colour distance between the predicted colour point and the colour point determined by measuring the colour patch is larger than the specified colour tolerance, since otherwise the colorant point would have been removed. For all second colorant points, i.e. those without a colour patch, the colour distance between the predicted and the measured colour point is within the specified colour tolerance, since otherwise the corresponding patch would not have been removed. For these second colorant points, the measured colour point can be determined by addressing the printer with the colorant values of the second colorant point so that a patch is printed and by measuring the colour values of the printed patch.

Having described in detail preferred embodiments of the current invention, it will now be apparent to those skilled in the art that numerous modifications can be made therein without departing from the scope of the invention as defined in the appending claims.

List of reference signs

11 : colorant value
12 : colorant value
14 : corner point
15 : colorant point
16 : second colorant point
20 : grid
21 : grid line
22 : grid line
25 : cell
30 : invariant boundary

**Claims**

1. A method for generating a printer model, the printer model comprising:

   - a plurality of colorant points (15), each colorant point (15) having colorant values (11, 12) in colorant space; and
   - for each colorant point (15) a corresponding colour point, said colour point having colour values in colour space; the method comprising the steps of:

   - obtaining a set of initial colorant points (15) and corresponding colour points;
   - reducing said set of initial colorant points (15) by removing at least one selected colorant point (15), for which the corresponding selected colour point is within a specified colour tolerance predictable by a predicted colour point obtained from colour points corresponding to colorant points (15) neighbouring said selected colorant point (15).

2. The method according to claim 1, further comprising the steps of:

- determining a CIELAB ΔE colour distance between said selected colour point and said predicted colour point;
- removing said selected colorant point (15) if said determined CIELAB ΔE colour distance is smaller than said specified colour tolerance.

**3.** The method according to claim 2 wherein said specified colour tolerance is at most ten units of CIELAB ΔE colour distance, more preferably at most five units, most preferably at most two units.

**4.** The method according to any one of the preceding claims, further comprising the steps of:

- defining a colorant domain in colorant space;
- dividing said colorant domain into a plurality of non-overlapping cells (25), wherein a union of said plurality of non-overlapping cells (25) constitutes said colorant domain and wherein said initial colorant points (15) are located at corner points (14) of said plurality of non-overlapping cells (25).

**5.** The method according to the preceding claim, further comprising the steps of:

- selecting out of said plurality of non-overlapping cells (25) a plurality of cells (25) having as a selected corner point (14) said selected colorant point (15);
- predicting the colour values at said selected corner point (14) by using colour values corresponding to corner points (14) of said plurality of selected cells (25) excluding said selected corner point (14).

**6.** The method according to any one of claims 4 to 5, further comprising the step of enlarging the set of initial colorant points (15) by adding a colorant point (15) at one of said corner points (14) of said plurality of non-overlapping cells (25).

**7.** A colour target for characterising a printing device, said colour target consisting of a plurality of colour patches located in colorant space on grid lines (21, 22) forming a regular grid (20), said grid lines (21, 22) having:

- first intersection points corresponding to said colour patches and located at first colorant points (15) in colorant space; and
- second intersection points without corresponding colour patches and located at second colorant points (16) in colorant space; wherein each colour patch has first measured colour values defining a first measured colour point in colour space corresponding to said first colorant point (15) in colorant space; wherein a colour distance is defined in said colour space; **characterised in that** for each colorant point (15, 16), selected out of said first (15) and second (16) colorant points, a corresponding predicted colour point is determined by using said first measured colour points corresponding to first colorant points (15) neighbouring said selected colorant point (15, 16) on the regular grid (20) so that
- for each colour patch, the colour distance between said corresponding predicted colour point and said first measured colour point is larger than a specified colour tolerance; and
- for each selected second colorant point (16), the colour distance between said corresponding predicted colour point and a second measured colour point is within said specified colour tolerance;

wherein said second measured colour point is defined by second colour values, measured on a patch printed by the printing device when addressed by colorant values (11, 12) of said selected second colorant point (16).

**8.** The colour target according to claim 7 wherein said colour distance is CIELAB ΔE colour distance.

**9.** The colour target according to claim 8 wherein said specified colour tolerance equals five units of CIELAB ΔE colour distance.

**10.** The colour target according to claim 8 wherein said specified colour tolerance equals two units of CIELAB ΔE colour distance.

Fig. 1

Fig. 2

Fig. 3

Fig. 4

Fig. 5

Fig. 6

Fig. 7

Fig. 8

Fig. 9

Fig. 10

<table>
<tr><td colspan="2">European Patent Office</td><td>EUROPEAN SEARCH REPORT</td><td>Application Number<br>EP 00 12 3727</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 929 978 A (KAWAKAMI HIDEHIKO ET AL) 29 May 1990 (1990-05-29) * claim 1 * | 1,7 | H04N1/60 |
| A | EP 0 763 928 A (MAHY) 19 March 1997 (1997-03-19) * abstract * | 1,7 | |
| A | EP 0 747 853 A (XEROX CORP) 11 December 1996 (1996-12-11) * abstract; figure 1 * | 1,7 | |
| A | US 5 692 071 A (GOVAERT RENE RAYMOND) 25 November 1997 (1997-11-25) * column 4, line 54 - column 6, line 31 * | 1,7 | |
| A | US 5 731 818 A (WAN SHIJIE ET AL) 24 March 1998 (1998-03-24) * abstract; figure 11 * | 1,7 | |
| A | US 5 729 362 A (DEISHI SATOSHI ET AL) 17 March 1998 (1998-03-17) * abstract; figure 7 * | 1,7 | TECHNICAL FIELDS SEARCHED (Int.Cl.7)<br><br>H04N |

The present search report has been drawn up for all claims

| Place of search | Date of completion of the search | Examiner |
|---|---|---|
| THE HAGUE | 15 March 2001 | Waern, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT
## ON EUROPEAN PATENT APPLICATION NO.

EP 00 12 3727

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2001

| Patent document cited in search report | | Publication date | Patent family member(s) | | Publication date |
|---|---|---|---|---|---|
| US 4929978 | A | 29-05-1990 | JP | 2023776 A | 25-01-1990 |
| | | | JP | 2543146 B | 16-10-1996 |
| | | | JP | 1110154 A | 26-04-1989 |
| | | | JP | 1120965 A | 12-05-1989 |
| EP 763928 | A | 19-03-1997 | JP | 9139853 A | 27-05-1997 |
| | | | US | 5812694 A | 22-09-1998 |
| | | | EP | 0763929 A | 19-03-1997 |
| | | | JP | 9139851 A | 27-05-1997 |
| | | | US | 5878195 A | 02-03-1999 |
| EP 0747853 | A | 11-12-1996 | US | 5739927 A | 14-04-1998 |
| | | | JP | 9009089 A | 10-01-1997 |
| US 5692071 | A | 25-11-1997 | DE | 69317567 D | 23-04-1998 |
| | | | DE | 69317567 T | 15-10-1998 |
| | | | WO | 9406242 A | 17-03-1994 |
| | | | EP | 0659322 A | 28-06-1995 |
| | | | JP | 8500945 T | 30-01-1996 |
| US 5731818 | A | 24-03-1998 | EP | 0679020 A | 25-10-1995 |
| | | | JP | 7298073 A | 10-11-1995 |
| US 5729362 | A | 17-03-1998 | JP | 8023451 A | 23-01-1996 |

EPO FORM P0459

For more details about this annex : see Official Journal of the European Patent Office, No. 12/82